# EUROPEAN PATENT SPECIFICATION

(11) **EP 1 251 019 B1**
(45) Date of publication and mention of the grant of the patent: **03.08.2011**
(21) Application number: 02076423.9
(22) Date of filing: 11.04.2002
(51) Int. Cl.: B60H 1/00, B60P 3/22

(54) **Transport vehicle cargo heating system**
Lastkraftwagen- Transportraumheizvorrichtung
Système de chauffage de remorque de poids lourd

(30) Priority: 18.04.2001 NL 1017873
(43) Date of publication of application: 23.10.2002
(73) Proprietor: TRS Transportkoeling B.V., 1431 GG Aalsmeer (NL)
(72) Inventor: Kooi, Eeuw Durk, 2202 AP Noordwijk (NL)
(74) Representative: Hooiveld, Arjen Jan Winfried

(56) References cited:
- EP-A- 0 202 344
- WO-A-97/32748
- FR-A- 2 487 056
- US-A- 2 118 884
- US-A- 2 762 570
- US-A- 5 265 437

## Description

The invention relates to a transport vehicle, comprising
- a combustion engine;
- a cargo space;
- a heating device for heating a liquid flowing through a liquid circuit.

It is noted that the term "vehicle" is understood to include vessels and aircraft, but in order not to complicate the description unnecessarily, only the term "vehicle" will be used hereinafter.

Such a vehicle is generally known. With the known vehicle, the heating device is used for heating the liquid flowing through the liquid circuit and thus indirectly heating goods present in the cargo space.

One drawback of the known transport vehicle is the following. Usually the generator delivers only 15 kW, which is for the larger part used for the aforesaid heating and for the rest for circulating the liquid in the liquid circuit of the cargo space. Given an efficiency of, for example, a diesel engine of about 30%, this is a very inefficient manner of heating.

The object of the invention is to overcome the drawbacks of the prior art, and in order to accomplish that objective a transport vehicle of the kind referred to in the introduction is according to the invention wherein the cargo space is provided with the liquid circuit including said heating device, characterized in that the vehicle further comprises a generator driven by said engine for generating electric energy for feeding the heating device, and that the transport vehicle further comprises a liquid circuit for cooling liquid of the combustion engine, which liquid circuit comprises a heat exchanger for giving off heat from the cooling liquid to the liquid in the liquid circuit of the cargo space. In a preferred variant, the liquid circuit for the cooling liquid of the combustion engine furthermore comprises a second heat exchanger for giving off heat from exhaust gases from the combustion engine to the cooling liquid. As a result, a fuel saving of more than 50% is achieved in comparison with prior art transport vehicles, so that longer intervals between the filling of the fuel tanks of the transport vehicles are possible. In addition, a large engine power is no longer required, so that smaller engines can be used.

US 2,143,212 discloses a system for heating a cargo space using cooling water from an engine which is further heated by exhaust gases. However, said document does not disclose a cargo space with a liquid circuit including a heating device for heating a liquid flowing through the liquid circuit. The heat exchange device located in the cargo space is not arranged to heat the liquid in the liquid circuit. Instead, the heat exchange device of said document is arranged to distribute heat from the liquid circuit throughout the body, wherein reference is made to column 2 lines 31-36 thereof.

In a preferred embodiment of a transport vehicle according to the invention, the liquid flowing through the liquid circuit of the cargo space comprises glycol.

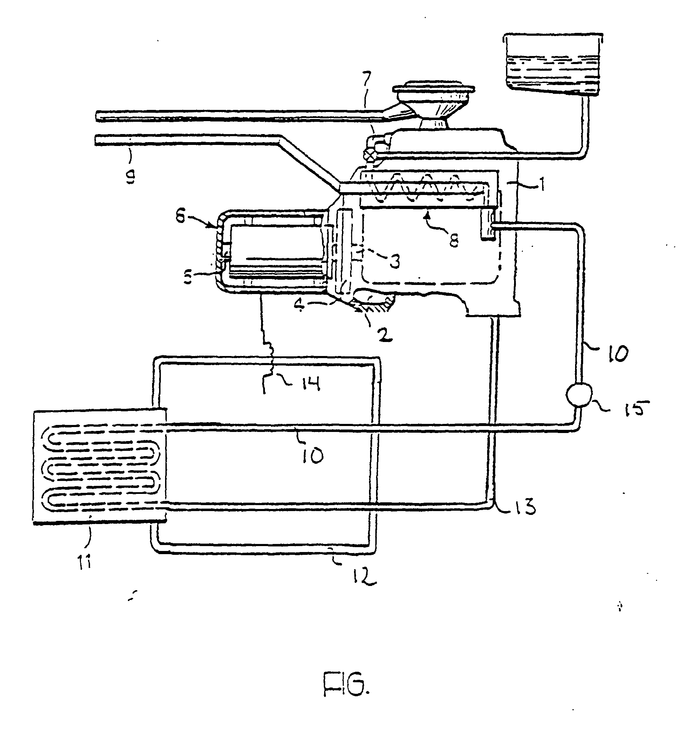

US 5,133,041 describes as closest prior art a device for heating a tank or tank container, wherein use is made of a liquid circuit wherein the liquid is heated by the exhaust gases of a combustion engine in a heat exchanger (WT1) and an electric heater (WT5), wherein reference is made to figure 1 of said document. The heat from the liquid circuit is distributed to the tank using a tank or tank container wall heat exchanger (WT2).

In another preferred embodiment of a transport vehicle according to the invention, the heating device comprises a heating coil.

The invention furthermore relates to a method for heating a liquid flowing through a liquid circuit of a cargo space of a transport vehicle by means of a heating device, in which a generator driven by a combustion engine is used for generating electric energy for feeding the heating device, wherein heat from cooling liquid flowing through a liquid circuit of the combustion engine is given off to the liquid in the liquid circuit of the cargo space by means of a heat exchanger.

The invention will now be explained in more detail with reference to a figure presented in a drawing, which shows a schematic flow diagram of a preferred embodiment of a transport vehicle according to the invention.

The figure shows a water-cooled internal combustion engine 1 with a jacket circuit 2, through which the water for cooling the engine circulates. The engine comprises a crank shaft 3, which drives the shaft 5 of an electric generator 6 via a flexible coupling 4. The hot water exiting the engine 1 from the highest point of the jacket circuit 2 is supplied to a first heat exchanger 8 via a pipe 7. Said heat exchanger 8 forms an integral part of the cylinder head of the engine 1, whilst the hot water is additionally heated by exhaust gases from the engine 1 flowing through the heat exchanger 8. After the exhaust gases have given off their heat to the hot water via the heat exchanger 8, they are discharged to the outside air through an exhaust pipe 9. From the heat exchanger 8, the hot water is subsequently supplied to a second heat exchanger 11 through a pipe 10, where the hot water gives off its heat to a liquid comprising glycol, which flows through a circuit 12. Said circuit 12 forms part of a cargo space or a container filled with chocolate or ink or the like, in which the hot liquid flowing through the circuit 12 heats the chocolate or the ink or the like. To that end, the circuit 12 surrounds the container. After having given off its heat to the liquid in the circuit 12 by means of the heat exchanger 11, the water, which has cooled down in the meantime, flows back to the engine 1 via a pipe 13. As a matter of fact, the water is circulated by a pump 15. The generator 6 in turn feeds an electric heating coil 14, which also contributes to the heating of the chocolate, ink or the like that is present in the cargo space/container.

The invention is not limited to the preferred variant as described above, but it also extends to other embodiments that fall within the scope of the invention. Thus it will be apparent to a person skilled in the art that the utilisation of (residual) heat from an engine, in particular heat being released from cooling water and/or exhaust gases, for heating goods present in a cargo space of a vehicle can also take place in a manner different from that which has been described above with reference to the figure.

## Claims

1. A transport vehicle, comprising:
- a combustion engine (1);
- a cargo space;
- an electric heating device (14) for heating a liquid flowing through a liquid circuit (12), of the cargo space and
the cargo space is provided with the liquid circuit 12 including said electric heating device (14),
**characterized in that** the vehicle further comprises a generator (6) driven by said engine (1) for generating electric energy for feeding the electric heating device (14), and that the transport vehicle further comprises a liquid circuit (10,13) for cooling liquid of the combustion engine (1), which liquid circuit (10,13) comprises a heat exchanger (11) for giving off heat from the cooling liquid to the liquid in the liquid circuit (12) of the cargo space.

2. A transport vehicle according to claim 1, wherein the liquid circuit (10,13) for the cooling liquid of the combustion engine (1) furthermore comprises a second heat exchanger (8) for giving off heat from exhaust gases from the combustion engine (1) to the cooling liquid.

3. A transport vehicle according to claim 1 or 2, wherein the liquid flowing through the liquid circuit (12) of the cargo space comprises glycol.

4. A transport vehicle according to claim 1, 2 or 3, wherein the heating device (14) comprises a heating coil.

5. A method for heating a liquid flowing through a liquid circuit (12) of a cargo space of a transport vehicle by means of an electric heating device (14), in which a generator (6) driven by a combustion engine (1) is used for generating electric energy for feeding the electric heating device (14), wherein heat from cooling liquid flowing through a liquid circuit (10, 13) of the combustion engine (1) is given off to the liquid in the liquid circuit (12) of the cargo space by means of a heat exchanger (11).

## Patentansprüche

1. Transportfahrzeug, umfassend:
- einen Verbrennungsmotor (1);
- einen Frachtraum;
- eine elektrische Heizvorrichtung (14) zum Beheizen einer Flüssigkeit, die durch einen Flüssigkeitskreislauf (12) des Frachtraums strömt, und wobei der Frachtraum mit dem Flüssigkeitskreislauf (12) versehen ist, der die genannte elektrische Heizvorrichtung (14) umfasst,
- **dadurch gekennzeichnet, dass** das Fahrzeug weiterhin einen Generator (6) umfasst, der durch den genannten Motor (1) angetrieben ist, zum Erzeugen von elektrischer Energie zum Versorgen der elektrischen Heizvorrichtung (14), wobei das Transportfahrzeug weiterhin einen Flüssigkeitskreislauf (10, 13) für Kühlflüssigkeit des Verbrennungsmotors (1) umfasst, wobei der Flüssigkeitskreislauf (10, 13) einen Wärmetauscher (11) zum Abgeben von Wärme von der Kühlflüssigkeit an die Flüssigkeit in dem Flüssigkeitskreislauf (12) des Frachtraums umfasst.

2. Transportfahrzeug nach Anspruch 1, **dadurch gekennzeichnet, dass** der Flüssigkeitskreislauf (10, 13) für die Kühlflüssigkeit des Verbrennungsmotors (1) weiterhin einen zweiten Wärmetauscher (8) umfasst, um Wärme von Abgasen des Verbrennungsmotors (1) an die Kühlflüssigkeit abzugeben.

3. Transportfahrzeug nach Anspruch 1 oder 2, **dadurch gekennzeichnet, dass** die Flüssigkeit, die durch den Flüssigkeitskreislauf (12) des Frachtraums strömt, Glykol enthält.

4. Transportfahrzeug nach einem der Ansprüche 1, 2 oder 3, **dadurch gekennzeichnet, dass** die Heizvorrichtung (14) eine Heizwicklung umfasst.

5. Verfahren zum Beheizen einer Flüssigkeit, die durch einen Flüssigkeitskreislauf (12) eines Frachtraums eines Transportfahrzeugs strömt, mittels einer elektrischen Heizvorrichtung (14), wobei ein Generator (6), der von einem Verbrennungsmotor (1) angetrieben ist, zur Erzeugung von elektrischer Energie zur Versorgung der elektrischen Heizvorrichtung (14) verwendet wird, wobei Wärme von Kühlflüssigkeit, die durch einen Flüssigkeitskreislauf (10, 13) des Verbrennungsmotors (1) strömt, an die Flüssigkeit in dem Flüssigkeitskreislauf (12) des Frachtraums mittels eines Wärmetauschers (11) abgegeben wird.

## Revendications

1. Véhicule de transport, comprenant :
- un moteur à combustion (1);
- un espace de chargement ;
- un dispositif de chauffage électrique (14) destiné à chauffer un liquide s'écoulant dans un circuit de liquide (12) de l'espace de chargement, l'espace de chargement étant doté du circuit de liquide (12) incluant ledit dispositif de chauffage électrique (14),
**caractérisé en ce que** le véhicule comprend en outre un générateur (6) entraîné par ledit moteur (1) pour générer de l'énergie électrique destinée à alimenter le dispositif de chauffage électrique (14), et **en ce que** le véhicule de transport comprend en outre un circuit de liquide (10, 13) destiné au liquide de refroidissement du moteur de combustion (1), lequel circuit de liquide (10, 13) comprend un échangeur de chaleur (11) destiné à transférer de la chaleur du liquide de refroidissement au liquide se trouvant dans le circuit de liquide (12) de l'espace de chargement.

2. Véhicule de transport selon la revendication 1, dans lequel le circuit de liquide (10, 13) destiné au liquide de refroidissement du moteur de combustion (1) comprend en outre un second échangeur de chaleur (8) destiné à transférer de la chaleur des gaz d'échappement provenant du moteur à combustion (1) au liquide de refroidissement.

3. Véhicule de transport selon la revendication 1 ou 2, dans lequel le liquide s'écoulant dans le circuit de liquide (12) de l'espace de chargement comprend du glycol.

4. Véhicule de transport selon la revendication 1, 2 ou 3, dans lequel le dispositif de transport (14) comprend une bobine de chauffage.

5. Procédé de chauffage d'un liquide s'écoulant dans un circuit de liquide (12) d'un espace de chargement d'un véhicule de transport au moyen d'un dispositif de chauffage électrique (14), dans lequel un générateur (6) entraîné par un moteur à combustion (1) est utilisé pour générer de l'énergie électrique destinée à alimenter le dispositif de chauffage électrique (14), de la chaleur provenant du liquide de refroidissement s'écoulant à travers un circuit de liquide (10, 13) du moteur à combustion (1) étant transférée vers le liquide se trouvant dans le circuit de liquide (12) de l'espace de chargement au moyen d'un échangeur de chaleur (11).
